# EUROPEAN PATENT APPLICATION

(11) **EP 3 995 053 A1**
(43) Date of publication of application: **11.05.2022**
(21) Application number: 20206252.7
(22) Date of filing: 06.11.2020
(51) Int. Cl.: A47G 23/16, G01F 23/292, B65D 51/24

(54) **DRINKING BOTTLE WITH A DISTANCE SENSOR**

(71) Applicant: Re-Company SA, 1204 Geneva (CH)
(72) Inventor: Abbate, Francesco, 1292 Chambesy (CH); Quarta, Pierandrea, 1206 Genf (CH); Villanueva López, José Vicente, 74130 Mont-Saxonnex (FR)
(74) Representative: Witte, Weller und Partner Patentanwälte mbB Stuttgart

(57) **Abstract**

Drinking bottles (10) are known from the prior art comprising a bottle body (12) for holding liquid and a closure unit (20) with a movable or removable lid (40), said drinking bottles (10) having electronic evaluation unit (30) which are adapted to evaluate at least one sensor signal, wherein the closure unit (20) of such a drinking bottle comprises an optical distance sensor (50) directed into the bottle body (12) to detect the amount of liquid remaining in the bottle body (12)

It is proposed to enhance such drinking bottles with a closure unit (20) having an insulating wall (60) which, in the closed state, isolates an electronic space (42) from an interior of the bottle body (12), wherein the distance sensor (50) is arranged in this electronic space (42) and wherein the insulating wall (60) is penetrated by at least one aperture (62, 64) in which a transparent light conducting element (72, 74) is arranged. Additionally or alternatively it is proposed to provide such a drinking bottle (10) with a temperature sensor (56), wherein the electronic evaluation unit (30) is adapted to activate and deactivate the distance sensor (50) as a function of a temperature measured by this temperature sensor (56).

## Description

### FIELD OF APPLICATION AND PRIOR ART

The invention relates to a drinking bottle equipped with sensor technology to collect data on the use of the drinking bottle. Such drinking bottles are also called Smart Bottles.

Both a known drinking bottle as well as a drinking bottle according to the invention have a bottle body for storing liquid. A closure unit with a movable or completely removable lid is provided on the bottle body providing a spout for drinking liquid from the drinking bottle.

In order to detect the amount of liquid remaining in the bottle, such a drinking bottle has an electronic evaluation system designed to evaluate at least one sensor signal. Furthermore, the closure unit has at least one sensor, namely an optical distance sensor which is directed into the bottle body in order to detect the amount of liquid remaining in the bottle body. The data from said sensor is being evaluated by the electronic evaluation system.

The detection of the amount of liquid remaining in the bottle is an important function of a smart bottle. In particular, it can be used to keep track of the amount of liquid consumed by the user, which can be used, for example, to inform the user if the amount of liquid consumed is too low.

There are various ways of detecting the remaining possibility. The use of an optical distance sensor offers the advantage that the corresponding sensor does not necessarily have to be located near the liquid and can be integrated in the closure unit in particular.

However, there is a problem especially with high temperature liquids. These lead to vapor above the liquid and makes a correct measurement more difficult, on the one hand because of the less clearly interpretable sensor signals due to water vapor and water condensing on optical elements of the sensor, on the other hand because the function of the distance sensor itself can be affected by the high temperature. The probability that an optical distance sensor will be permanently damaged increases with temperature.

### OBJECT OF THE INVENTION AND SOLUTION

The object of the invention is to further develop a generic drinking bottle in such a way that it provides sufficient evaluation possibilities and a good insulation for the distance sensor, especially when used with hot liquids.

According to a first aspect of invention, this is solved by a drinking bottle as described above, which is enhanced in that the closure unit has an insulating wall which, when closed, isolates an electronics receiving space from an interior of the bottle body. At least the distance sensor is arranged in this receiving space. The insulation wall is penetrated by at least one aperture in which a transparent light conducting element is arranged.

According to a second aspect of invention, which is preferably provided together with the first aspect of invention, the drinking bottle has a temperature sensor. The electronic evaluation system is designed to activate and deactivate the distance sensor depending on a measured temperature.

As already explained above, a drinking bottle in accordance with the invention as well as a generic drinking bottle have a bottle body for receiving liquid before it is dispensed, and a closure unit attached to the bottle body. The body of the bottle can especially be made of metal, especially of stainless steel, plastic and/or ceramic. Preferably, it is designed with several shells to maintain the temperature of the liquid for a long time. The bottle body is designed for the attachment of the closure unit. In particular, the closure unit can provide a base with a spout for attachment to the bottle body, to which the lid is attached or can be attached to close the outlet opening.

If the closure unit is designed with a base, the base may be detachably attached to the bottle body, in particular by means of a thread or a bayonet, in order to be able to remove the closure unit as a whole for the purpose of filling liquid into the bottle body. In the case of a design without a base, the cap is preferably screwed directly into an internal thread of the bottle body by means of a thread.

The lid may in particular be a hinged lid hinged to the base. However, a lid that can be completely separated from the base, for example as a threaded cap. Preferably, a Snap-On fastening mechanism is provided by means of which the lid locks into place on the base. A locking system is regarded as snap-on fastening mechanism if it comprises a locking element being deflected when the lid is being closed and snaps abruptly into a locking position when the lid is closed. Such a snap-on fastening mechanism is convenient to use with one hand and, when being closed, causes the closure unit to vibrate, which is advantageous with regard to the removal of liquid that has collected on the light conducting element.

The drinking bottle has an electronic evaluation system designed to evaluate sensor signals from at least one sensor. This electronic evaluation unit comprises at least an energy source such as a battery and at least one integrated circuit or microprocessor with input lines for connecting the at least one sensor. In order to keep the energy consumption low, preferably no complex arithmetic operations take place on the integrated circuit or processor. Rather, it is preferred if the electronic evaluation system is equipped with an interface, in particular a wireless interface such as Bluetooth Low Energy (BLE), to communicate with an external device such as a mobile phone. On this external device more complex arithmetic operations can then be carried out. In the simplest case, the electronic evaluation system is primarily designed to make the recorded sensor values available to such other devices via such an interface. This alone is regarded as an evaluation in the sense of the invention.

The drinking bottle preferably has more than one sensor. However, it has at least the optical distance sensor mentioned above. An optical distance sensor is understood to be a sensor that has at least one light-sensitive cell that is capable of converting detected light incidence into an electrical signal. The optical distance sensor is preferably designed to emit an optical signal itself, which is then received and evaluated again after interaction with the liquid. In such a case the sensor has a transmitter and a receiver. The transmitter and the receiver are preferably part of the same sensor unit although two separate units, one for sending a light signal and one for receiving said signal are also possible. The transmitter and the receiver are preferably between 3 mm and 20 mm apart from each other and/or preferably point in the same direction.

Various types of sensors are available as optical distance sensors, for example sensors in which the attenuation of an emitted optical signal by the liquid or the point of impact of the reflected signal on a sensor surface are evaluated.

However, it is particularly advantageous if the optical sensor is a time of flight sensor. Such sensors have a transmitter part and a receiver part. The measurement is based on evaluating the duration of light signals from the transmitter part to the liquid surface and back to the receiver part in order to detect the amount of liquid remaining in the bottle body. The measured duration allows a conclusion to be drawn about the position of the liquid surface.

Preferably, the drinking bottle also includes an inclination sensor or an acceleration sensor. Its sensor signal allows conclusions to be drawn as to whether the drinking bottle has just taken up a position suitable for measurement, in particular whether it is standing upright and still.

As explained above, according to the first aspect of the invention, the closure unit in which the optical distance sensor is provided, in particular its lid containing the distance sensor, has an insulating wall which, when the lid is closed, isolates an electronics receiving space from an interior of the body of the bottle. The distance sensor is arranged in these electronics receiving space. In this way the exposure of the distance sensor to heat and/or water vapor can be reduced. Preferably, all other electronic components, in particular the integrated circuit or the microprocessor, are also accommodated in this electronics receiving space of the closure unit, in particular in the lid, and are thus also protected against heat and moisture. Embodiments are also possible having a plurality of electronics receiving spaces being isolated from each other. In particular the temperature sensor can be located in an electronics receiving space being isolated form the electronics receiving space of the distance sensor.

In order to prevent the size of the lid from becoming too large due to the electronics receiving space and the electronic components therein, it may be advantageous for the insulation wall and the at least one light conducting element to protrude into a drinking spout of the bottle body when the lid is closed.

In order that the distance sensor can detect light in the bottle body despite the insulating wall, the insulating wall is penetrated by at least one aperture in which the transparent light conducting element is arranged.

The light conducting element is arranged in such a way to the distance sensor that at least its receiver is aligned with the light conducting element, so that the optical path from the bottle body to the receiver is open. The light conducting element is transparent, which means that the opacity is preferably lower than 30%, preferably lower than 15%, regarding visible light, at least regarding the visible light transmitted by a transmitter of the distance sensor.

Preferably the light conducting element has a refractive index of about 1.3 to 1.4 in order to prevent light refraction in the case of liquid on its end face pointing towards the bottle body. The light conducting element can be made of glass. However, transparent plastic is preferred for lower costs and easier production.

In the case of a distance sensor which also has a transmitter for sending an optical signal, it is preferable to have at least two light conducting elements inserted in separate apertures in the insulation wall. The use of two light conducting elements inserted in two separate apertures prevents or reduces the risk of cross talk, i.e. that the emitted signal will be detected by the receiver even before it is reflected by the liquid surface, which would be associated with the risk that the measurement of the remaining quantity of liquid would lead to incorrect results. The two light conducting elements are spaced apart according to the distance between the receiver and transmitter of the distance sensor. In particular, the light conduction elements should preferably be aligned parallel to each other.

The two light conducting elements do not need to be designed as separate components for such a configuration. A design is also possible in which the light conducting elements are connected by a connecting bridge for easier handling during manufacturing and/or assembly, wherein said connecting bridge is preferably located on the side of the electronics receiving space. However, a design in which the two light conducting elements are formed by fully separate components or sections, i.e. they are not connected by a connection of transparent material, is preferred. These two sections or components are preferably identical in construction.

The insulation wall preferably has a thickness of more than 3 mm, in particular preferably at least 5 mm. This thickness is usually sufficient to keep the temperature in the receiving space sufficiently low for the distance sensor to work reliably, even at temperatures in the bottle body of up to 90°C. The at least one light conducting element also preferably has a length of more than 3 mm, preferably at least 5 mm, between its end faces at which light is coupled in and out.

It is of particular advantage if the insulation wall has a main wall which is provided with a recess. A separately manufactured insert is arranged in this recess, which in turn has at least one aperture for the at least one light conducting element. Between the main wall and the insert a seal is preferably provided, preferably designed as separate sealing element and for example formed by an O-ring. Such a construction of the insulation wall from multiple components facilitates the production, in particular if the insert and the at least one light conducting element are formed in one piece, as will be explained below. The multi-piece construction of the main wall can also be advantageous with regard to thermal insulation.

The at least one light conducting element can be manufactured as a separate component from the insulation wall and can be inserted into the aperture during the manufacture of the closure unit. It is then preferably fixed in the aperture by means of a frictional clamp connection or a positive lock-ingsnap-in connection. To insert the light conducting element into the aperture, it may be advantageous if the light conducting element has a conical shape at least in sections, which acts as an insertion bevel when inserted.

However, a design in which the at least one light conducting element forms a common one-piece component with a non-transparent section of the insulation wall, in particular with the insert part described above, has proven to be advantageous. This is achieved in particular by multi-component injection moulding. The insulation wall or its insert is first produced in an injection moulding process, whereby the at least aperture is kept free by the mouldingtool and in particular by usingslider in the mouldingtool. Afterward, in a further step and usually after removing the sliders which kept the apertures free the at least one light conducting element is injected using a transparent plastic. Preferably the at least one injection point for the transparent plastic is located offset to the light line defined by the position of the transmitter or the receiver.

This one-piece design results in a tight connection between the insulation wall or the insert on the one hand side and the light conducting element on the other hand side. In addition, this design can be used to ensure that the position of the light conducting element is precisely defined and that no inaccuracies are caused by the assembly process.

The end of the light conducting element pointing towards the interior of the bottle body is directly exposed to the interior of the drinking bottle and the liquid stored there. Liquid can therefore collect on the exposed end face, and in particular, water vapor can condense there. This can make the measurement inaccurate.

It may therefore be advantageous if this end face of the at least one light conducting element or of at least one of two light conducting elements pointing towards the interior of the bottle body has hydrophilic or hydrophobic properties. Hydrophobic in the sense of the invention is defined by a surface which forms a contact angle of more than 75° with water on the surface. Hydrophilic in the sense of the invention is defined by a surface which forms a contact angle of less than 30° with water on the surface.

It has been shown that both hydrophobic and hydrophilic end faces are advantageous. In the case of hydrophilic surfaces, the liquid on the end face forms a continuous film of approximately the same thickness, which hardly affects the measuring accuracy of the distance sensor. With hydrophobic surfaces, the adhesion of moisture to the end face is generally less. In addition, the liquid tends to detach more easily from the end face, especially as a result of vibrations or shocks which for example can be caused by closing a lid with a snap-on fastening mechanism.

The hydrophobic or hydrophilic design can be achieved by applying a coating to the end face. A modification of the surface, for example with plasma, can also be used. Furthermore, it is also possible to achieve the hydrophilic or hydrophobic property of the end face by making the light conducting element as a whole from a hydrophobic or hydrophilic material.

Alternatively to a uniform design of the surface as hydrophilic or hydrophobic surface, designs in which the surface is not uniform are also included and can be advantageous. For example, only an outer hydrophilic ring surface of the end face could be provided, which surrounds a non-hydrophilic or less hydrophilic centre, so that liquid is sucked outwards from the centre. A design in which only the centre is hydrophobic can also achieve a similar effect. A particularly strong effect is achieved if the centre is hydrophobic and an outer ring surface is hydrophilic.

The end face pointing towards the interior of the bottle body can be flat. Using a flat end face makes the production easier. However, other shapes can also be useful, especially concave or convex curved end faces. The concave curved end face, especially in combination with a hydrophilic design, promotes the formation of a continuous liquid film on the end face which does not interfere with the measurement. The convex curved surface causes the liquid to be collected in the center. Particularly in combination with a hydrophobic configuration, this collection of the liquid promotes the detachment of the liquid. It is particularly advantageous if the snap-on fastening mechanism described above is provided for the cap, as this causes a vibration when the bottle is closed, which promotes the detachment of the liquid from the convex and/or hydrophobic end face.

Preferably, the drinking bottle is equipped with a temperature sensor to detect the temperature inside the bottle body or to detect a temperature influenced by the temperature in the bottle body. Measuring the temperature can be advantageous for evaluating the measurement results of the distance sensor.

In particular, such a temperature sensor is relevant in connection with the second aspect of invention listed above, according to which the electronic evaluation unit are designed to activate and deactivate the distance sensor depending on a measured temperature. It has been shown that there is a risk of a distance sensor being damaged at high temperatures. This can be prevented if the temperature sensor deactivates the sensor. Such deactivation preferably takes place when a threshold temperature of 60° to 90° is reached.

This does not necessarily mean that only the actual temperature value measured is being used. Since it is advantageous if the temperature sensor is also located in electronics receiving space and thus separate from the inside of the bottle body by an insulation wall, a temperature rise is only detected with a delay in such a case.

It can therefore be advantageous that the insulation wall has another aperture in which a thermal conducting element is arranged, in particular made of a metallic material. This thermal conduction element causes the temperature riseto bedetected more quickly. Like the light conducting element, it is preferred that the length of this thermal conducting element is more than 3 mm.

It is also possible to arrange the temperature sensor in an insulated electronics receiving space and to estimate the temperature in the bottle body depending on the speed of the temperature rise. A rapid rise in temperature at the insulated temperature sensor thus makes it possible to estimate the higher actual temperature in the bottle body, especially with knowledge of the quantity of liquid present in the bottle body gained by using the distance sensor.

### SHORT DESCRIPTION OFTHE DRAWINGS

Further advantages and aspects of the invention result from the claims and from the following description of preferred embodiments of the invention, which are explained below using the figures.
Figs. 1 and 2 show a drinking bottle in accordance with the invention from outside as well as in a sectional view.
Figs. 3 and 3A show the closure unit of the drinking bottle in a sectional view and an enlarged view of an insulation wall of the closure unit.
Fig. 4 and 5 show an insert of the insulation wall with apertures in which light conducting elements are arranged.
Figs. 6A to 6C show different versions of the light conducting elements in a sectional view.
Fig. 7 shows an alternative design of the insulation wall insert with an additional aperture in which a thermal conducting element is arranged.

### DETAILED DESCRIPTION OF THE EXAMPLES

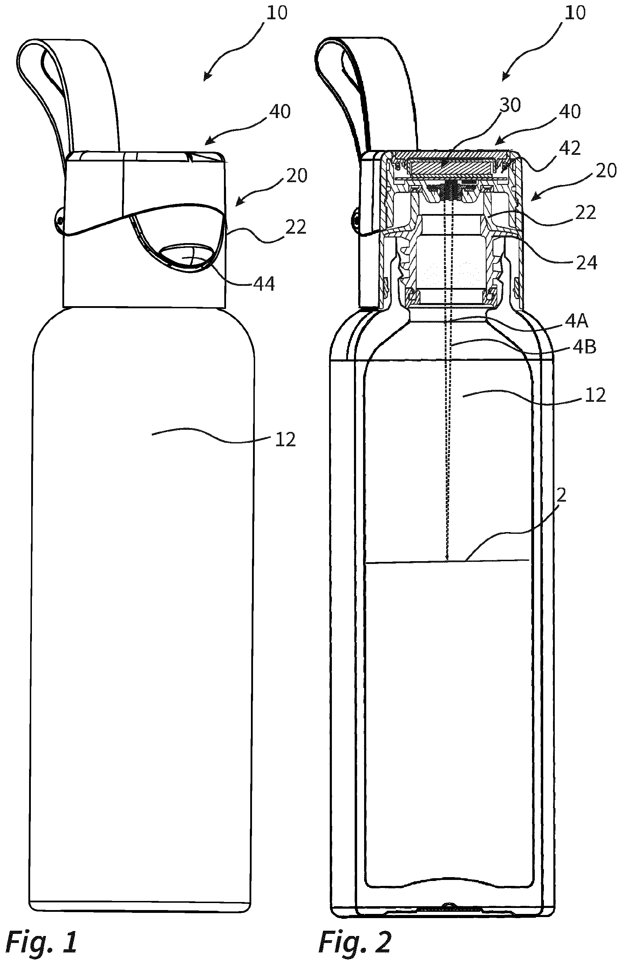

Figures 1 and 2 show a drinking bottle 10 according to the invention, which is intended for refilling and for repeated use. The drinking bottle 10 has a bottle body 12, which is designed as a double-shell bottle body for thermal insulation. A closure unit 20 is placed on the bottle body 12, which has a base 22 attached to the bottle body and a hinged lid 40. The base 22 can be screwed into the bottle body 12 by means of a thread and provides a drinking spout 24 forming a drinking outlet 14 for the liquid. If the bottle body is to be filled, the entire closure unit 20 is unscrewed for this purpose.

For the purpose of drinking from the drinking bottle 10, however, the base 22 is not removed, but instead the hinged lid 40 is opened so that liquid can be taken out through the drinking outlet 14 of the base 22. After drinking, the hinged lid 40 is closed again and secured with a snap-on fastening mechanism 44.

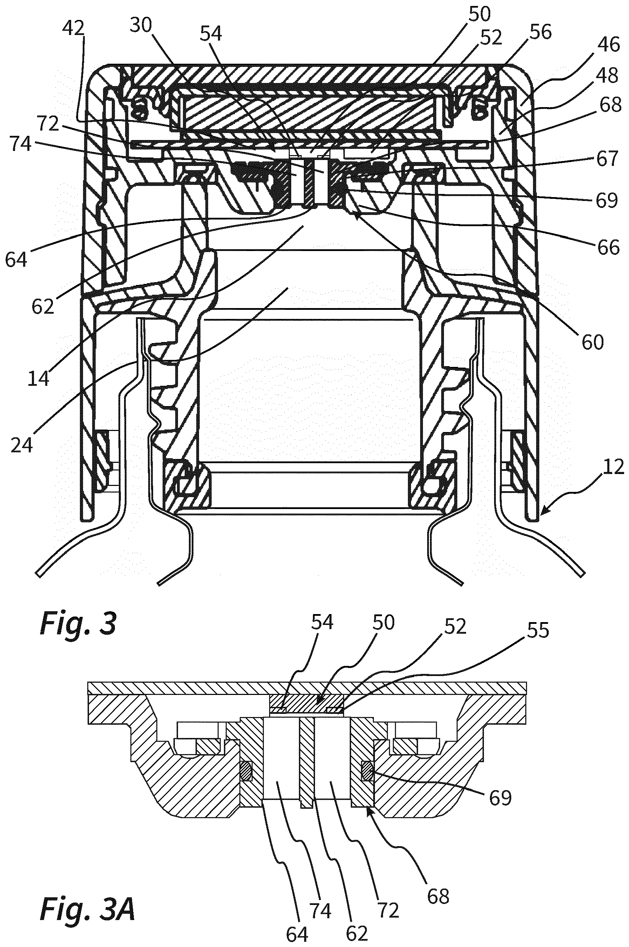

As can be seen from Fig. 2 and especially from Fig. 3 and 3A, the hinged lid 40 is equipped with an electronic evaluation unit 30. This electronic evaluation unit 30 is provided in an electronics receiving space 42 of the hinged lid 40 which is limited on the one hand by an outer component 46 of the lid 40 and on the other hand by an inner component 48 of the lid 40. The receiving space 42 is separated from the interior of the bottle body by said inner component 48 and an insulating wall 60 formed primarily by the latter. This separation of the electronic evaluation unit 30 and the bottle body 12 is made on the one hand to protect the electronic evaluation unit against moisture, but also to achieve thermal insulation. The plastic of the inner component 48 is therefore preferably a plastic with a low coefficient of thermal conductivity.

The electronic evaluation unit 30 serves the purpose of recording the drinking behaviour of the user in order to be able to carry out an analysis on this basis and, for example, to be able to give the user advice on drinking behaviour. This analysis can be carried out by electronic components of the drinking bottle itself. Preferably, however, the drinking bottle only has a simple integrated circuit with low computing power and low energy consumption and communicates via a wireless interface such as Bluetooth Low Energy with an external device such as a mobile phone on which a more intensive analysis process can take place. In addition to the aforementioned integrated circuit or microprocessor, the electronic analysis system has an energy storage device in the form of a battery and at least one sensor 50 suitable for monitoring the drinking behaviour of the user. In the present design, this sensor 50 is designed as distance sensor 50 with a transmitter 52 and a receiver 54 covered by a thin transparent protection element 55. The distance sensor 50 is preferably a time of flight sensor, which analyses the filling level in the bottle body by means of a time of flight measurement. This is illustrated in Fig. 2.

The line 2 in Fig. 2 shows the liquid level at the time of a measurement. As can be seen from the arrows 4A and 4B, an optical signal is emitted by a transmitter 52 of the distance sensor 50 in the direction of the bottle body (arrow 4A). This signal is reflected at the liquid surface 2 of the liquid and is thus reflected back to the distance sensor 50 and its receiver 54 (arrow 4B). The transit duration of the signal makes it possible to determine where the liquid level is currently located, taking the speed of light into account.

Referring to Fig. 3 and 3A, the closing unit's structure and arrangement of the distance sensor 50 with its transmitter 52 and its receiver 54 is illustrated. Since the distance sensor 50 is arranged in the electronics receiving space 42 to protect it from great heat as well as from moisture and since this receiving space 42 is insulated from the interior of the bottle body 12 by the insulation wall 60, two apertures 62, 64 are provided in the insulation wall 60, namely in an insert 68. Said insert 68 is arranged in a recess 67 of a main wall 66, said main wall being integral part of the inner component 48. Between the insert 68 and the surrounding main wall 66 a sealing in form of an O-ring 69 is provided. The apertures 62, 64 each have a length of about 7 mm and are each equipped with a light conducting element 72, 74 of approximately cylindrical shape. The light conducting elements 72, 74 are made of transparent plastic and are preferably formed in one piece with the non-transparent part of the insert 68 by means of a two-component injection moulding process. The two light conducting elements 72, 74 are spaced apart and aligned parallel to each other according to the spacing of the transmitter 52 and the receiver 54 of the distance sensor 50.

In principle, a design with a single larger light conducting element for the transceiver and the receiver is also possible. However, this is associated with the risk that the receiver 54 will register signals from the transmitter 52 which are reflected back by optical effects in the light conducting element immediately and before reaching the liquid surface. This is called cross talk. For avoiding this cross talk, a design with two separate light conducting elements is preferred, especially if these are longer than 3 mm.

The design of the insulation wall with the aforementioned main wall 66, in whose recess 76 an insert 68 is arranged, is of great advantage with regard to production. The light conducting elements can be manufactured together with the insert or pre-assembled in the insert before it is inserted into the recess 67 after an O-ring for insulation has been fitted.

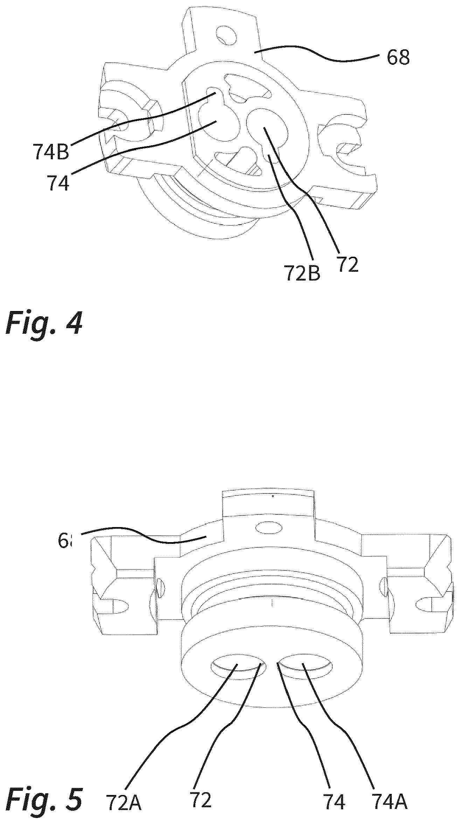

Fig. 4 and 5 show the insert 68 from above (Fig. 4) and from below (Fig. 5). It can be seen that the apertures 62, 64 have an approximately cylindrical shape. At the upper end of the apertures, lateral recesses are provided, which are filled by projections 72B, 74B of the light conducting elements 72, 74. This serves the purpose of providing a location for the injection points of the light conducting elements so that the optical quality of the light conducting elements is not influenced by these injection points.

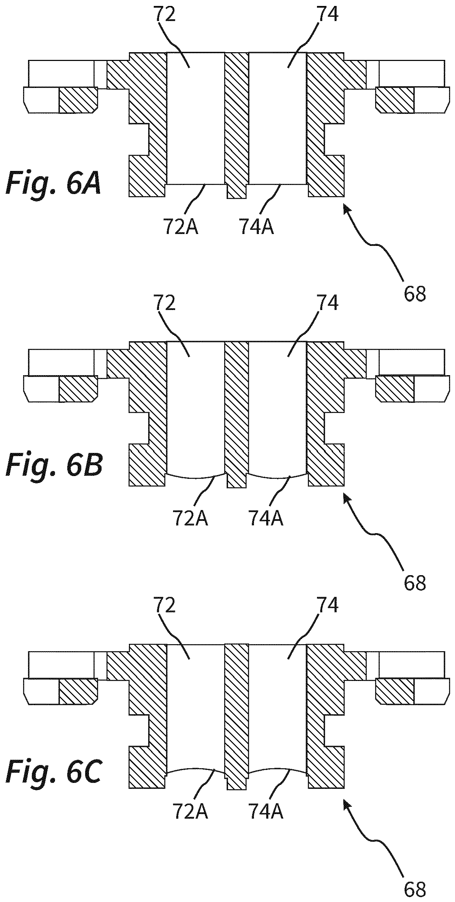

Figs. 6A to 6C show different embodiments of the insert 68 in a side view. Fig. 6A shows a design in which the light conducting elements 72, 74 are provided with a flat surface on their lower front face 72A, 74A facing the bottle body. This is the simplest design, which usually fulfils its purpose.

However, improved performance can be achieved with the design accordingto Fig. 6B. In this design, the lower end faces 72A, 74A are convex, i.e. curved outwards. At the same time, the material of the light conducting elements 72, 74 is hydrophobic or the end faces 72A, 74A themselves have been provided with hydrophobic properties by coating or by a treatment like a plasma treatment. This design facilitates the removal of liquid from the light conducting elements. Liquid that condenses there usually collects in the center of the light conducting elements 72, 74. When the bottle is closed or shaken, at least a substantial portion of the liquid on these faces 72A, 74A will fall down in the bottle body 12 in the form of a drop, so that a subsequent distance measurement will be more accurate.

Fig. 6C shows a different design of the end faces 72A, 74A. Here, the end faces are concave. The material of the light conducting elements is hydrophilic. Alternatively, treatment or coating of the end faces 72A, 74A may have resulted in local hydrophilic properties. This design is also advantageous with regard to accurate distance measurement. Although this design does not cause the liquid to separate from the end faces 72A, 74A. However, it has been shown that the concave and/or hydrophilic design of the liquid forms a uniform liquid film, which also allows accurate measurement.

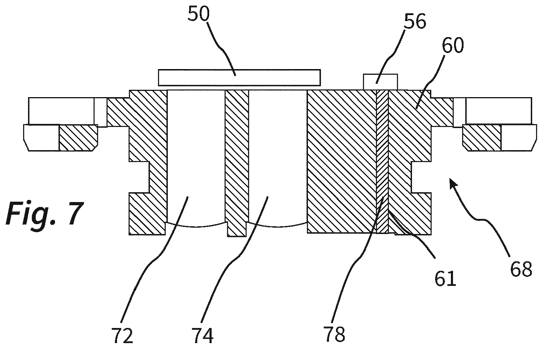

Fig. 7 shows an alternative design of an insert 68, where the electronic evaluation unit are additionally equipped with a temperature sensor 56. This temperature sensor is also arranged in the electronics receiving space 42 or in a separate electronics receiving space and is thus thermally insulated from the interior of the bottle body 12. In order to enable an accurate temperature measurement nevertheless, a further aperture 61 is provided in the insert 68, in which a thermal conducting element 78, for example a short metal rod, is inserted. The temperature of the interior of the bottle body 12 is thus transmitted relatively quickly to the temperature sensor 56, so that the electronic evaluation unit 30 knows the temperature of a liquid shortly after it has been filled into the bottle body 12. The temperature sensor 56, in conjunction with the electronic evaluation unit 30, can be used in particular to operate the temperature-sensitive distance sensor 50 only at sufficiently low temperatures. For example, the distance sensor 50 could be deactivated when a temperature of 70 °C is reached in the liquid storage tank. As soon as the temperature in the bottle body has fallen below this threshold value again, the distance sensor 50 can be reactivated and determine the filling level in bottle body 12 again.

## Claims

1. Drinking bottle (10) having the following features:
a. the drinking bottle (10) comprises a bottle body (12) for holding liquid, and
b. the drinking bottle (10) comprises a closure unit (20) with a base (22) and a movable or removable lid (40), and
c. the drinking bottle (10) has electronic evaluation units (30) which are adapted to evaluate at least one sensor signal, and
d. the closure unit (20) comprises an optical distance sensor (50) directed into the bottle body (12) to detect the amount of liquid remaining in the bottle body (12),
**characterized by** at least one of the following features:
e. the closure unit (20) has an insulating wall (60) which, in the closed state, isolates an electronic space (42) from an interior of the bottle body (12), the distance sensor (50) being arranged in this electronic space (42) and the insulating wall (60) being penetrated by at least one aperture (62, 64) in which a transparent light-conducting element (72, 74) is arranged, and/or
f. the drinking bottle (10) has a temperature sensor (56) and the electronic evaluation unit (30) is adapted to activate and deactivate the distance sensor (50) as a function of a temperature measured by this temperature sensor (56).

2. drinking bottle according to claim 1 with the following further features:
a. at least two light-conducting elements (72, 74) are provided which are inserted into separate apertures (62, 64) in the insulation wall (60), the two light-conducting elements (72, 74) preferably being formed by separate components,
preferably with the following additional characteristic:
b. the at least two light conducting elements (72, 74) are aligned parallel to each other, and/or
c. one of the light conducting elements (72, 74) is assigned to a transmitter (52) of the distance sensor (50) and one of the light conducting elements (72, 74) is assigned to a receiver (54) of the distance sensor.

3. the drinking bottle according to claim 1 or 2 having the following further feature:
a. the insulation wall (60) has a thickness of more than 3 mm, preferably of at least 5 mm and/or the light conducting element (72, 74) has a length of more than 3 mm, preferably of at least 5 mm,
preferably with the additional characteristic:
b. the insulating wall (60) comprises a main wall (66) provided with a recess (67) in which an insert (68) is inserted in which the at least one aperture for receiving the at least one light conducting element is provided.

4. drinking bottle (10) according to one of the above claims with at least one of the following further features:
a. the at least one light conducting element (72, 74) is adapted to the aperture (62, 64) in such a way that it is inserted into the aperture (62, 64) forming a clamp connection or a snap-in connection, and/or
b. the at least one light conducting element (72, 74) has a projection (72B, 74B) at its upper end at which an injection point of the light conducting element (72, 74) is located.

5. drinking bottle (10) according to one of the above claims having the following further feature:
a. at least one end face (72A, 74A) of the at least one light conducting element (72, 74) pointing in the direction of the interior of the bottle body (12) has hydrophilic and/or hydrophobic properties,
preferably with one of the following additional characteristics
b. the hydrophilic or hydrophobic nature of the end face (72A, 74A) is achieved by a coating applied to the end face (72A, 74A); or
c. the hydrophilic or hydrophobic property of the end face (72A, 74A) is obtained by making the light conducting element (72, 74) as a whole from a hydrophobic or hydrophilic material,

6. drinking bottle (10) according to one of the above claims with the following additional feature:
a. an end face (72A, 74A) of the at least one light conducting element (72, 74) pointing towards the interior of the bottle body (12) has a concave or convex shape.

7. drinking bottle (10) according to one of the above claims with the following further feature:
a. the distance sensor (50) is a time-of-flight sensor (50) with a transmitter part (52) and a receiver part (54), wherein the transit time of light signals from the transmitter part (52) to the liquid surface and back to the receiver part (54) is evaluated in order to detect the amount of liquid remaining in the bottle body (12),
preferably with the following additional characteristic
b. the transmitter part (52) and the receiver part (54) are spaced from each other by at least 3 mm and/or a maximum of 20 mm.

8. drinking bottle (10) according to one of the above claims with at least one of the following additional features:
a. the temperature sensor (56) is arranged in a receiving space (42) which is separated from the interior of the bottle body by the insulation wall (60), and
b. an aperture (61) is provided in the insulation wall (60), in which a thermal conduction element (78) is arranged, in particular made of a metallic material.

9. drinking bottle (10) according to one of the above claims with the following additional feature:
a. the distance sensor (50) is provided on the movable or removable lid (40),
preferably with at least one of the following additional characteristics:
b. a Snap-On fastening device (44) is provided by means of which the lid (40) is secured in the closed state to the base (22) of the closure unit (20), and/or
c. the bottle body (12) has a drinking outlet (14) and the insulating wall (60) and the at least one light conducting element (72, 74) project into the drinking outlet (14) when the lid (40) is closed.

10. Drinking bottle (10) according to one of the above claims with the following additional feature:
a. the electronic evaluation unit (30) is designed to deactivate the distance sensor (50) at a limit temperature which is between 60°C and 90°C.

11. Drinking bottle (10) according to one of the above claims with the following additional feature:
a. the electronic evaluation unit (30) is designed to estimate the temperature in the bottle body (12) on the basis of a temperature rise.

12. Drinking bottle (10) according to one of the above claims with at least one of the following further features:
a. the at least one light conducting element (72, 74) is made of plastic, in particular of a thermoplastic material like for example PMMA, and/or
b. the insulation wall (60) is at least partially made of a plastic material with a thermal conductivity λ of less than 0,3 W / (m · K), preferably of PC, PET or PP.
